# EUROPÄISCHE PATENTSCHRIFT

(11) **EP 2 891 024 B1**
(45) Veröffentlichungstag und Bekanntmachung des Hinweises auf die Patenterteilung: **01.06.2016**
(21) Anmeldenummer: 13748266.7
(22) Anmeldetag: 09.08.2013
(51) Int. Cl.: G05G 1/08

(54) **BEDIENVORRICHTUNG FÜR EINE FUNKTIONSEINRICHTUNG EINES KRAFTFAHRZEUGS**
CONTROL UNIT FOR A FUNCTIONAL DEVICE IN A MOTOR VEHICLE
APPAREIL DE COMMANDE POUR UN DISPOSITIF FONCTIONNEL D'UN VÉHICULE À MOTEUR

(30) Priorität: 31.08.2012 DE 102012017266
(43) Veröffentlichungstag der Anmeldung: 08.07.2015
(73) Patentinhaber: Audi AG, 85045 Ingolstadt (DE)
(72) Erfinder: MÜLLER, Ulrich, 85055 Ingolstadt (DE); SCHNEIDER, Johann, 85139 Wettstetten (DE); MITTERMEIER, Manfred, 93336 Altmannstein (DE); BOUAZIZ, Tahar, 85055 Ingolstadt (DE)
(74) Vertreter: Brandt, Kai
(86) Internationale Anmeldenummer: PCT/EP2013/002392
(87) Internationale Veröffentlichungsnummer: WO 2014/032763

(56) Entgegenhaltungen:
- DE-A1-102005 040 125
- DE-A1-102009 053 457
- US-A1- 2010 140 059

## Beschreibung

Die vorliegende Erfindung betrifft eine Bedienvorrichtung für eine Funktionseinrichtung eines Kraftfahrzeugs. Überdies betrifft die vorliegende Erfindung ein Kraftfahrzeug.

Zur Bedienung von Funktionseinrichtungen eines Kraftfahrzeugs sind entsprechende Bedienvorrichtungen vorgesehen. Diese können einen Drehsteller oder Drehencoder umfassen. Die Offenlegungsschrift DE102005040125 offenbart einen solchen Drehsteller. Heutige Drehsteller besitzen mechanische Raststellungen in denen sie entlang ihrer Drehrichtung einrasten. Diese Rastpositionen werden vom Nutzer bzw. der Bedienperson haptisch wahrgenommen. Oft wird auch zusätzlich ein akustisches Signal, beispielsweise ein Klicken, ausgegeben. Diese Art von Drehsteller sind weit verbreitet und kommen beispielsweise in Klimabedienteilen oder der zentralen Eingabeeinheit im Kraftfahrzeug zum Einsatz. In der Regel werden die Drehsteller zur Weiterschaltung einer diskreten Funktion genutzt. Beispielsweise wird in einem Klimabedienteil die Temperatur pro Raststufe um eine vorgegebene Temperatur erhöht (beispielsweise 0,5° C) oder die Geschwindigkeit eines Lüfters wird hochgesetzt.

In grafisch basierten Systemen, wie einer Mensch-Maschine-Schnittstelle, kann der Drehsteller zur Navigation im Display der Mensch-Maschine-Schnittstelle genutzt werden. Dabei bewirkt eine Verstellung des Drehstellers um eine Rastposition eine Verschiebung der Bildschirmdarstellung um einen Schritt nach oben oder nach unten. Bei einem Navigationssystem kann durch die Verstellung des Drehstellers um eine Rastposition eine Vergrößerung bzw. eine Verkleinerung der Kartendarstellung um eine Stufe bewirkt werden.

Die Raststellungen des Drehstellers werden in der Regel mechanisch mit einer Rastkurve oder magnetisch mit Magnetpolpaaren erzeugt. Mit jeder Raststellung wird ein entsprechender elektrischer Wert ausgegeben. D. h. beim Drehen in die nächste Raststellung wird ein elektrisches Signal von einer Steuereinrichtung ausgewertet, um die Drehrichtung und die Anzahl der Raststufen bzw. Klicks zu ermitteln. Diese Signal ist konform mit den haptisch spürbaren Raststufen, in denen der Drehsteller einrastet bzw. nach dem Drehen stabil stehen bleibt.

Wenn eine Bedienperson bei einem Klimabedienteil den Drehsteller um drei Raststellungen nach rechts dreht, erhält die Steuereinrichtung drei Signale, ermittelt daraus drei Rechtsdrehungen und regelt die Temperatur um drei Stufen höher. In der Regel wird die Stellung des Drehencoders optisch oder mittels Schleifkontakten abgegriffen. Dabei sind üblicherweise zwei Kodierelemente vorgesehen, die an dem Drehencoder angeordnet sind. Diese weisen entlang der Drehrichtung eine winkelversetzte Kodierung auf, anhand der eine Erfassungseinrichtung die Drehrichtung erfassen kann.

In diesem Zusammenhang offenbart die DE 10 2005 025 887 A1 eine Bedieneinrichtung für ein Kraftfahrzeug mit einem Dreh-/Drückbedienelement. Das Dreh-/Drückbedienelement ist derart ausgebildet, dass durch seine Betätigung ein Markierungselement auf einer Anzeigevorrichtung bewegbar ist, wobei während einer Drehbewegung des Dreh-/Drückbedienelements Rastpositionen vorgegeben sind.

Des Weiteren ist aus der US 2002/0057152 A1 ein Steuereinrichtung mit einem Drehelement bekannt. Der Drehwinkel des Drehelements kann mit einem Hall-Sensor erfasst werden. In Abhängigkeit von dem Drehwinkel kann eine haptische Rückmeldung an die Bedienperson ausgegeben werden.

Die DE 10 2005 055 307 A1 beschreibt einen Drehsteller mit inkrementellem Drehwinkelgeber für den Einsatz in einem Kraftfahrzeug. An einer Welle des Drehstellers ist ein Kodierelement mit periodischen Ausnehmungen befestigt. Durch die Drehung des Drehsteller und der damit verbundenen Drehung des Kodierelements drehen sich die Ausnehmungen durch den Erfassungsbereich einer Lichtschranke. Dies verursacht eine Modulation der analogen Ausgangsspannung eines Photosensors. Mittels einer Auswerteelektronik kann dem Verlauf der analogen Ausgangsspannung ein inkrementeller Drehwinkel des Drehstellers zugeordnet werden.

Aus der DE 10 2006 060 808 A1 ist ein Winkelsensor zur Drehwinkelerfassung eines Bauteils mit einem ring- oder kreisscheibenartigen Magneten bekannt. Im Bereich des Magnetfelds des Magneten ist ein Hall-Element angeordnet, von dem ein von der Drehposition des Magneten abhängiges Digitalsignal erzeugbar ist. Zudem ist ein Analogsignal eines magnetoresistiven Sensorelements in Abhängigkeit von dem Digitalsignal einem ersten 180°-Winkelbereich oder einem dem ersten Winkelbereich folgenden zweiten 180°-Winkelbereich eines 360°-Winkelbereichs zuordenbar.

Schließlich beschreibt die DE 10 2008 057 098 A1 einen Drehsteller für ein Fahrzeug, der eine Rastung und eine Bewegungserfassung aufweist. Mit einer Sensoreinrichtung des Drehstellers kann die Drehrichtung und der Drehwinkel eines Stellelements erfasst werden.

Es ist Aufgabe der vorliegenden Erfindung, eine Bedienvorrichtung der eingangs genannten Art bereitzustellen, mit der eine einfachere und intuitivere Bedienung ermöglicht werden kann.

Diese Aufgabe wird durch eine Bedienvorrichtung mit den Merkmalen des Patentanspruchs 1 und durch ein Kraftfahrzeug mit den Merkmalen des Patentanspruchs 10 gelöst. Vorteilhafte Weiterbildungen der vorliegenden Erfindung sind in den Unteransprüchen angegeben.

Die Bedienvorrichtung für eine Funktionseinrichtung eines Kraftfahrzeugs umfasst einen Drehsteller, der an einem Halteelement drehbar gelagert ist und der zumindest ein Kodierelement aufweist, eine Erfassungseinrichtung zum Erfassen eines absoluten Drehwinkels zwischen dem Drehsteller und dem Halteelement anhand einer Kodierung des zumindest einen Kodierelements und eine Rasteinrichtung, durch die dem Drehsteller entlang einer Drehrichtung eine Mehrzahl von Rastpositionen vorgegeben sind, wobei die Erfassungseinrichtung dazu ausgebildet ist, anhand der Kodierung des zumindest einen Kodierelements die jeweilige Rastposition und den absoluten Drehwinkel zwischen zumindest zwei der Rastpositionen zu erfassen.

Die Bedienvorrichtung kann im Armaturenbrett oder in der Mittelkonsole des Kraftfahrzeugs angeordnet sein. Das Kraftfahrzeug kann auch mehrere Bedienvorrichtungen umfassen, mit denen Funktionseinrichtungen, wie z. B. eine Klimaanlage, ein Navigationssystem, eine Bedieneinrichtung mit dazugehöriger Anzeige, ein Unterhaltungssystem oder dergleichen, angesteuert werden können. Die Bedienvorrichtung umfasst einen Drehsteller, der auch als Dreh-/Drücksteller ausgebildet sein kann. Darüber hinaus umfasst die Bedienvorrichtung eine Rasteinrichtung, die dem Drehsteller mehrere Raststufen bzw. Rastpositionen vorgibt. Diese Rastpositionen können mechanisch mit einer Rastkurve oder durch entsprechende Magnete erzeugt werden. Bei einer Drehung des Drehsteller rastet dieser in den Rastpositionen ein.

An dem Drehsteller ist zumindest ein Kodierelement angeordnet. Das zumindest eine Kodierelement erstreckt sich bevorzugt entlang der Umfangsrichtung des Drehstellers oder eine Welle des Drehstellers. Zudem umfasst die Bedienvorrichtung eine Erfassungseinrichtung, die einen Sensor umfassen kann. Des Weiteren kann die Erfassungseinrichtung ortsfest an dem Halteelement oder einem Gehäuse der Bedienvorrichtung angeordnet sein. Durch die Kodierung des zumindest einen Kodierelements wird in der Erfassungseinrichtung ein Sensorsignal bzw. ein entsprechendes Ausgangsignal erzeugt. Dieses Kodierelement kann beispielsweise einen oder mehrere Magnete umfassen und die Erfassungseinrichtung kann einen magnetischen Sensor, beispielsweisen einen Hall-Sensor, umfassen. Alternativ dazu kann das Kodierelement Aussparungen oder eine vorbestimmte Geometrie aufweisen, die mit einem optischen Sensor der Erfassungseinrichtung abgetastet werden. Ebenso ist die Verwendung von Schleifkontakten denkbar.

Die Erfassungseinrichtung der Bedienvorrichtung ist nun dazu ausgebildet, anhand der Kodierung des zumindest einen Kodierelements die vorgegebenen Rastpositionen einzeln zu erfassen. Damit müssen die Raststufen nicht mehr einzelnen elektronisch ausgewertet werden. Zudem kann mit der Erfassungseinrichtung der absolute Drehwinkel zwischen mindestens zwei Rastpositionen erfasst werden. Dabei kann der Drehwinkel des Drehsteller bezüglich des Halteelements mit einer Genauigkeit ausgewertet werden, die geringer als 1° ist. Zudem kann mit der Erfassungseinrichtung anhand der Kodierung des zumindest einen Kodierelements die Drehrichtung des Drehstellers erfasst werden. Bei der Bedienvorrichtung sind die diskreten Rastpositionen vorhanden, die durch die haptische Rückmeldung beim Benutzer ein hochwertiges Bediengefühl hervorrufen. Darüber hinaus können leichte Auslenkungen des Drehstellers vor dem Einrasten in die nächste Rastposition mit der Erfassungseinrichtung erkannt werden. Dadurch können auf einfache Weise neben den Rastpositionen auch die Zwischenstellungen zwischen den Raststufen mit einer hohen Auflösung erfasst werden und entsprechend weiter verarbeitet werden.

In einer Ausführungsform umfasst die Bedienvorrichtung eine Steuereinrichtung, die in Abhängigkeit von der erfassten Rastposition und/oder des erfassten absoluten Drehwinkels zwischen den zumindest zwei Rastpositionen ein Steuersignal zum Bedienen der Funktionseinrichtung ausgibt. Die Steuereinrichtung kann mit der Erfassungseinrichtung gekoppelt sein. In Abhängigkeit von den Ausgangssignalen, die mit der Erfassungseinrichtung erfasst werden, können mit der Steuereinrichtung Steuersignale zum Ansteuern der Funktionseinrichtungen des Kraftfahrzeugs ausgegeben werden. Dabei können in den Rastpositionen des Drehstellers und an den Zwischenpositionen entsprechende Steuersignale erzeugt werden. Zudem kann dabei auch die Drehrichtung des Drehstellers berücksichtigt werden. Dabei können verschieden Vorteile erreicht werden, wenn die Drehrichtung und der Drehwinkel bereits vor dem Erreichen des nächsten mechanischen Klicks bekannt sind. So kann bereits vor dem Erreichen einer Rastposition ein Rechenvorgang in einer Funktionseinrichtung gestartet werden. Zudem können bei grafischen Anzeigen flüssigere Bewegungen und Übergänge der Grafikelemente ermöglicht werden.

Bevorzugt ist die Erfassungseinrichtung dazu ausgebildet, anhand der Kodierung des zumindest einen Kodierelements eine Drehgeschwindigkeit und/oder eine Änderung der Drehgeschwindigkeit des Drehstellers zu erfassen. In Abhängigkeit von der Drehgeschwindigkeit können grafische Darstellungen entsprechen angepasst werden. Zudem können durch die Auswertung der Drehgeschwindigkeit bzw. deren Änderung die Funktionseinrichtungen besser in Abhängigkeit von den Bedieneingaben des Benutzers angesteuert werden.

In einer Ausgestaltung weist der Drehsteller zwei Kodierelemente auf und die Erfassungseinrichtung gibt anhand der jeweiligen Kodierung der Kodierelemente für jedes der Kodierelemente ein analoges Ausgangssignal aus. Die beiden Analogsignale können optisch, magnetisch oder mechanische erzeugt werden. Der Verlauf der beiden Analogsignale kann entlang der Drehrichtung identisch sein. Bevorzugt wird mit der Erfassungseinrichtung anhand der Kodierung entlang der Drehrichtung ein im Wesentlichen sinusförmiges Ausgangssignal für jedes der Kodierelemente bereitgestellt. Die Kodierelemente sind bevorzugt so ausgebildet und an dem Drehsteller angeordnet, dass die beiden Analogsignale, die mit der Erfassungseinrichtung bereitgestellt werden, zueinander versetzt sind. Damit kann auf einfache Weise die Drehrichtung des Drehstellers ermittelt werden.

Bevorzugt ermittelt die Erfassungseinrichtung die jeweilige Rastposition anhand eines Überschreitens eines Schwellwerts zumindest eines der analogen Ausgangssignale. Durch die Vorgabe eines Schwellwerts für jedes der Analogsignale kann eine Art Digitalsignal ermittelt werden. Anhand des Verlaufs dieses Digitalsignals kann auf die einzelnen Rastpositionen rückgeschlossen werden. Dieses Digitalsignal kann für eine zuverlässig Auswertung herangezogen werden, da geringfügige Änderungen in der Linearität oder Verschiebungen des jeweiligen Ausganssignals immer noch zu einem sicheren Digitalsignal führen.

Des Weiteren ermittelt die Erfassungseinrichtung den absoluten Drehwinkel zwischen den zumindest zwei Rastpositionen bevorzugt anhand eines steigenden und/oder eines fallenden Verlaufs zumindest eines der analogen Ausgangssignale. Zur Auswertung des Drehwinkels zwischen dem Drehsteller und dem Halteelement kann die Amplitude eines oder beider Analogsignale genutzt werden. Hierbei werden die steigenden oder fallenden Bereiche bzw. Abschnitte des Analogsignals herangezogen. Es kann auch nur das analoge Ausgangssignal zur Ermittlung des Drehwinkels herangezogen werden, dessen Signalverlauf zum Zeitpunkt der Ermittlung des Drehwinkels eine steigenden oder fallenden Verlauf aufweist. Dabei können die Analogsignale auch mit einem Analog-Digital-Wandler digitalisiert werden, wobei jedem Wert der Signalamplitude ein Wert für einen Drehwinkel zugeordnet werden kann. Dabei bedarf es nicht zwingend einer genauen Auswertung des Drehwinkel, da wie zuvor beschrieben die Drehrichtung, die Drehgeschwindigkeit und/oder die Änderung der Drehgeschwindigkeit ausgewertet werden. Somit können Nichtlinearitäten oder Verschiebungen in den Analogsignalen akzeptiert werden.

In der erfindungsgemässen Ausgestaltung der Bedienvorrichtung weist der Drehsteller drei Kodierelemente auf und die Erfassungseinrichtung gibt anhand der jeweiligen Kodierung der Kodierelemente für zwei der drei Kodierelemente jeweils ein digitales Ausgangssignal und für das dritte der drei Kodierelemente ein analoges Ausgangssignal aus. Auch in dieser Ausführungsform der Bedienvorrichtung können die Ausgangssignale optisch, magnetisch oder mittels Schleifkontakten erzeugt werden. Anhand von zwei der drei Kodierelemente gibt die Erfassungseinrichtung jeweils ein digitales Ausgangssignal aus. Durch ein Erfassung eines drittes Kodierelement gibt die Erfassungseinrichtung ein analoges Ausgangssignal aus. Durch dieses drei Ausgangssignale können die einzelnen Rastpositionen und der Drehwinkel zwischen zumindest zwei Rastpositionen einfach und zuverlässig erfasst werden.

Bevorzugt ermittelt die Erfassungseinrichtung .anhand der zwei digitalen Ausgangssignale die Drehrichtung und die jeweilige Rastposition des Drehstellers. Die Kodierelemente, durch deren Erfassung die Erfassungseinrichtung jeweils ein digitales Ausgangssignal ausgibt, sind bevorzugt derart ausgebildet und entlang der Umfangsrichtung des Drehstellers angeordnet, dass die beiden erfassten Digitalsignale zueinander versetzt sind. Damit kann auf einfache Weise die Drehrichtung des Drehstellers ermittelt werden. Des Weiteren kann die Kodierung dieser zwei Kodierelemente so ausgestaltet sein, dass anhand der beiden Digitalsignale die einzelnen Rastpositionen ermittelt werden können.

In einer weiteren Ausführungsform ermittelt die Erfassungseinrichtung anhand des analogen Ausgangssignals den absoluten Drehwinkel zwischen den zumindest zwei Rastpositionen. Das analoge Ausgangssignal kann proportional zum Drehwinkel sein. Damit kann der Drehwinkel präzise anhand der Amplitude des Analogsignals ermittelt werden.

Das erfindungsgemäße Kraftfahrzeug umfasst zumindest eine Funktionseinrichtung und eine zuvor beschriebene erfindungsgemässe Bedienvorrichtung zum Bedienen der zumindest einen Funktionseinrichtung. Die zuvor im Zusammenhang mit der erfindungsgemäßen Bedienvorrichtung beschriebenen Vorteile und Weiterbildungen können in gleicher Weise auf das erfindungsgemäße Kraftfahrzeug übertragen werden.

Die vorliegende Erfindung wird nun anhand der beigefügten Zeichnungen näher erläutert. Dabei zeigen:
- Fig. 1: eine schematische Darstellung einer Bedienvorrichtung in einer geschnittenen Seitenansicht;
- Fig. 2: Ausgangssignale einer Erfassungseinrichtung der Bedienvorrichtung; und
- Fig. 3: Ausgangssignale der Erfassungseinrichtung der Bedienvorrichtung in einer weiteren Ausführungsform.

Die nachfolgend näher geschilderten Ausführungsbeispiele stellen bevorzugte Ausführungsformen der vorliegenden Erfindung dar.

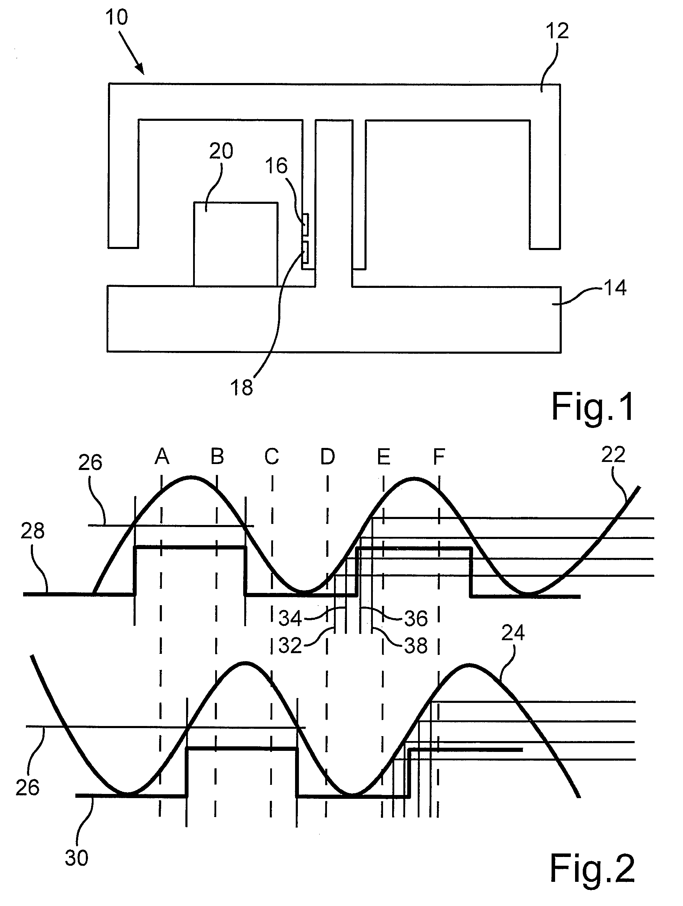

Fig. 1 zeigt eine schematische Darstellung einer Bedienvorrichtung 10 in einer geschnittenen Seitenansicht. Die Bedienvorrichtung 10 dient zum Bedienen einer Funktionseinrichtung eines Kraftfahrzeugs. Eine solche Funktionseinrichtung kann eine Klimaanlage, ein Navigationssystem, eine Bedieneinrichtung mit dazugehöriger Anzeige, ein Unterhaltungssystem oder dergleichen sein. Die Bedienvorrichtung 10 umfasst einen Drehsteller 12, der an einem Halteelement 14 drehbar gelagert ist. Des Weiteren sind an dem Drehsteller 12 zwei Kodierelemente 16 und 18 angeordnet. Die Kodierelemente 16, 18 können einen oder mehrere Magnete umfassen. Alternativ dazu können die Kodierelemente 16, 18 elektrische Kontakte umfassen. In einer weiteren Ausführungsform können die Kodierelemente 16, 18 entsprechende Aussparungen umfassen.

Des Weiteren umfasst die Bedienvorrichtung 10 eine Erfassungseinrichtung 20, die mechanisch fest mit dem Halteelement 14 verbunden ist. Die Erfassungseinrichtung 20 kann ein entsprechendes Sensorelement umfassen, das mit den Kodierelementen 16, 18 so zusammenwirkt, dass von der Erfassungseinrichtung 20 in Abhängigkeit von einer Kodierung der Kodierelemente 16, 18 jeweils ein Ausgangssignal bereitgestellt wird. Wenn die Kodierelemente 16, 18 Magnete umfasst, kann die Erfassungseinrichtung 20 einen magnetischen Sensor, beispielsweise einen Hall-Sensor aufweisen. Weisen die Kodierelemente 16, 18 elektrische Kontakte auf, kann die Erfassungseinrichtung 20 Schleifkontakte umfassen. Sind die Kodierelemente 16, 18 durch Aussparungen gebildet, kann die Erfassungseinrichtung 20 einen optischen Sensor umfassen.

Fig. 2 zeigt den jeweiligen Verlauf der Ausgangssignale 22 und 24, die von der Erfassungseinrichtung 20 in Abhängigkeit von der Drehrichtung des Drehstellers 12 ausgegeben werden. Durch die Drehung des Drehstellers 12 wird durch die beiden Kodierelemente 16 und 18 in der Erfassungseinrichtung 20 jeweils ein Ausgangssignal 22, 24 erzeugt. Beispielsweise ergibt sich das Ausgangssignal 22 durch die Erfassung bzw. Abtastung des Kodierelements 16 mit der Erfassungseinrichtung 20. Das Ausgangssignal 24 ergibt sich durch die Erfassung des Kodierelements 18 mit der Erfassungseinrichtung 20. Die Kodierelemente 16, 18 sind dabei derart ausgebildet, dass jeweils sich jeweils ein im Wesentlichen kontinuierliches bzw. analoges Ausgangssignal 22, 24 ergibt, wobei die Ausgangssignale 22, 24 entlang der Drehrichtung zueinander versetzt sind. Vorliegenden weisen die Ausgangssignale 22, 24 einen im Wesentlichen sinusförmigen Verlauf auf.

Die Bedienvorrichtung 10 weist zusätzlich eine hier nicht dargestellte Rasteinrichtung auf, durch die dem Drehsteller 12 Rastpositionen vorgegeben sind. Im vorliegenden Ausführungsbeispiel werden mit der Rasteinrichtung sechs Rastpositionen A, B, C, D, E und F bereitgestellt, die in Fig. 2 gekennzeichnet sind. Die Kodierung der Kodierelemente 16, 18 ist dabei so gewählt, dass die Maxima und Minima der Ausgangssignale 22, 24 jeweils in der Mitte zwischen zwei der Rastpositionen A bis F liegen.

Zur Auswertung der analogen Ausgangssignale 22, 24 wird jeweils ein Schwellwert 26 vorgebeben. Damit kann für jedes der analogen Ausgangssignale 22, 24 jeweils ein Digitalsignal 28 und 30 ermittelt werden. Das jeweilige Digitalsignal 28, 30 nimmt den Wert eins an, wenn das dazugehörige Ausgangssignal 22, 24 den Schwellwert 26 überschreiten. In den Bereichen, in denen das jeweilige Ausgangssignal 22, 24 den Schwellwert 26 nicht überschreitet, nimmt das dazugehörige Digitalsignal 28, 30 den Wert null an. Anhand der jeweiligen Werte der beiden Digitalsignale 28, 30 können die Drehrichtung und die einzelnen Rastpositionen A bis F bestimmt werden.

Des Weiteren kann anhand der Ausgangssignale 22, 24 der Drehwinkel zwischen zumindest zwei Rastpositionen A bis F ermittelt werden. Um den Drehwinkel in einem Bereich zwischen zumindest zwei Rastpositionen A bis F zur ermitteln, wird das Ausgangssignal 22, 24 herangezogen, das in diesem Bereich einen steigenden oder fallenden Verlauf aufweist. Vorliegend soll der Drehwinkel zwischen den beiden Raststufen D und E bestimmt werden. In diesem Beispiel werden in dem Bereich zwischen den Raststufen D und E vier Werte 32, 34, 36 und 38 festgelegt und die jeweilige Amplitude des Ausgangssignals 22, 24 zu den Werten 32 bis 38 bestimmt. Dazu werden nur die Amplituden des Ausgangssignals 22 erfasst, deren Signal in dem Bereich zwischen den Raststufen D und E steigend ist. Das Ausgangssignal 24, das in diesem Bereich ein Minimum aufweist, wird hierbei nicht berücksichtigt, da die Amplitudenwerte des Ausgangssignals 24 zu den Werten 32 bis 38 gleich sein können oder sehr nahe nebeneinander liegen können. Zur Bestimmung des Drehwinkels zwischen den Rastpositionen E und F wird nur das Ausgangssignal 24 untersucht, das in diesem Bereich einen steigenden Verlauf aufweist (vgl. Fig. 2).

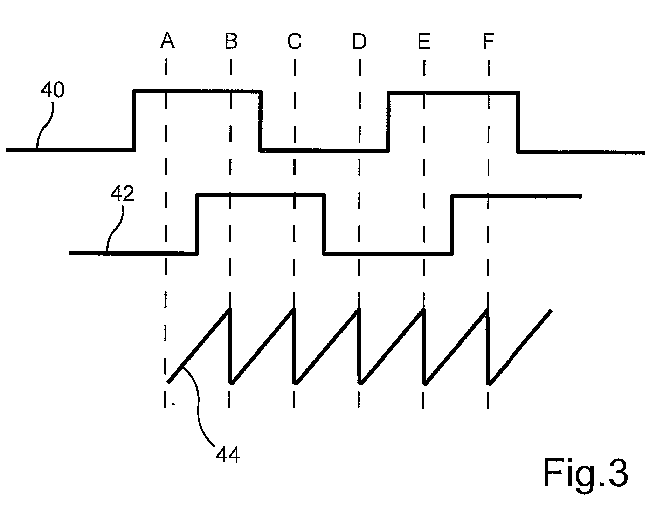

Die Bedienvorrichtung 10 kann auch drei Kodierelemente 16, 18 umfassen. Fig. 3 zeigt den Verlauf von Ausgangssignalen 40, 42 und 44, die von einer Erfassungseinrichtung 20 einer Bedienvorrichtung 10 ausgegeben werden, die drei Kodierelemente 16, 18 umfasst. Die Kodierelemente 16, 18 sind dabei derart ausgestaltet, dass die Erfassungseinrichtung 20 durch das Erfassen von zwei der drei Kodierelement 16, 18 jeweils ein digitales Ausgangssignal 40, 42 ausgibt. Anhand der digitalen Ausgangssignale 40, 42 kann, wie im Zusammenhang mit den Digitalsignalen 28 und 30 in Fig. 2 erläutert, die Drehrichtung und die einzelnen Rastpositionen A bis F ermittelt werden. Durch Auswertung des dritten der drei Kodierelemente 16, 18 wird von der Erfassungseinrichtung 20 ein Ausgangssignal 44 ausgegeben, das zumindest bereichsweise einen kontinuierlichen bzw. analogen Verlauf aufweist. Anhand des Ausgangssignals 44 kann der Drehwinkel zwischen zwei der Rastpositionen A bis F ermittelt werden.

## Patentansprüche

1. Bedienvorrichtung (10) für eine Funktionseinrichtung eines Kraftfahrzeugs mit
- einem Drehsteller (12), der an einem Halteelement (14) drehbar gelagert ist und der zumindest ein Kodierelement (16, 18) aufweist,
- einer Erfassungseinrichtung (20) zum Erfassen eines absoluten Drehwinkels zwischen dem Drehsteller (12) und dem Halteelement (14) anhand einer Kodierung des zumindest einen Kodierelements (16, 18) und
- einer Rasteinrichtung, durch die dem Drehsteller (12) entlang einer Drehrichtung eine Mehrzahl von Rastpositionen (A, B, C, D, E, F) vorgegeben sind, wobei
- die Erfassungseinrichtung (20) dazu ausgebildet ist, anhand der Kodierung des zumindest einen Kodierelements (16, 18) die jeweilige Rastposition (A, B, C, D, E, F) und den absoluten Drehwinkel zwischen zumindest zwei der Rastpositionen (A, B, C, D, E, F) zu erfassen,
**dadurch gekennzeichnet, dass**
- der Drehsteller (12) drei Kodierelemente (16, 18) aufweist und die Erfassungseinrichtung (20) anhand der jeweiligen Kodierung der Kodierelemente (16, 18) für zwei der drei Kodierelemente (16, 18) jeweils ein digitales Ausgangssignal (40, 42) und für das dritte der drei Kodierelemente (16, 18) ein analoges Ausgangssignal (44) ausgibt.

2. Bedienvorrichtung (10) nach Anspruch 1,
**dadurch gekennzeichnet, dass**
die Bedienvorrichtung (10) eine Steuereinrichtung umfasst, die in Abhängigkeit von der erfassten Rastposition (A, B, C, D, E, F) und/oder des erfassten absoluten Drehwinkels zwischen den zumindest zwei Rastpositionen (A, B, C, D, E, F) ein Steuersignal zum Bedienen der Funktionseinrichtung ausgibt.

3. Bedienvorrichtung (10) nach Anspruch 1 oder 2,
**dadurch gekennzeichnet, dass**
die Erfassungseinrichtung (20) dazu ausgebildet ist, anhand der Kodierung des zumindest einen Kodierelements (16, 18) eine Drehgeschwindigkeit und/oder eine Änderung der Drehgeschwindigkeit des Drehstellers (12) zu erfassen.

4. Bedienvorrichtung (10) nach Anspruch 1,
**dadurch gekennzeichnet, dass**
die Erfassungseinrichtung (20) anhand der zwei digitalen Ausgangssignale (40, 42) die Drehrichtung und die jeweilige Rastposition (A, B, C, D, E, F) des Drehstellers (12) ermittelt.

5. Bedienvorrichtung (10) nach Anspruch 1 oder 2,
**dadurch gekennzeichnet, dass**
die Erfassungseinrichtung (20) anhand des analogen Ausgangssignals (44) den absoluten Drehwinkel zwischen den zumindest zwei Rastpositionen (A, B, C, D, E, F) ermittelt.

6. Kraftfahrzeug mit zumindest einer Funktionseinrichtung und einer Bedienvorrichtung (10) nach einem der vorhergehenden Ansprüche zum Bedienen der zumindest einen Funktionseinrichtung.

## Claims

1. Operating unit (10) for a functional device of a motor vehicle, comprising:
- a rotary adjuster (12) which is rotatably mounted on a holding element (14) and which comprises at least one coding element (16, 18),
- a detecting device (20) for detecting an absolute angle of rotation between the rotary adjuster (12) and the holding element (14) by means of a coding of the at least one coding element (16, 18), and
- a latching device by means of which a plurality of latching positions (A, B, C, D, E, F) for the rotary adjuster (12) are defined in a direction of rotation,
- the detecting device (20) being configured to detect the respective latching position (A, B, C, D, E, F) and the absolute angle of rotation between at least two of the latching positions (A, B, C, D, E, F) by means of the coding of the at least one coding element (16, 18),
**characterised in that**
- the rotary adjuster (12) comprises three coding elements (16, 18) and the detecting device (20) emits a digital output signal (40, 42) in each case for two of the three coding elements (16, 18) and an analogue output signal (44) for the third of the three coding elements (16, 18), by means of the respective coding of the coding elements (16, 18).

2. Operating unit (10) according to claim 1,
**characterised in that**
the operating unit (10) comprises a control device which emits a control signal for operating the functional device, depending on the latching position (A, B, C, D, E, F) detected and/or the absolute angle of rotation detected between the at least two latching positions (A, B, C, D, E, F).

3. Operating unit (10) according to claim 1 or 2,
**characterised in that**
the detecting device (20) is configured to detect a speed of rotation and/or a change in the speed of rotation of the rotary adjuster (12) by means of the coding of the at least one coding element (16, 18).

4. Operating unit (10) according to claim 1,
**characterised in that**
the detecting device (20) determines the direction of rotation and the respective latching position (A, B, C, D, E, F) of the rotary adjuster (12) by means of the two digital output signals (40, 42).

5. Operating unit (10) according to claim 1 or 2,
**characterised in that**
the detecting device (20) determines the absolute angle of rotation between the at least two latching positions (A, B, C, D, E, F) by means of the analogue output signal (44).

6. Motor vehicle having at least one functional device and an operating unit (10) according to one of the preceding claims for operating the at least one functional device.

## Revendications

1. Appareil de commande (10) pour un dispositif fonctionnel d'un véhicule à moteur, comprenant :
- un actionneur rotatif (12), qui est monté à rotation sur un élément de support (14) et qui présente au moins un élément de codage (16, 18),
- un dispositif d'acquisition (20) pour saisir un angle de rotation absolu entre l'actionneur rotatif (12) et l'élément de support (14) sur la base d'un codage du au moins un élément de codage (16, 18) et
- un dispositif d'encliquetage par lequel on définit à l'avance pour l'actionneur rotatif (12) dans un sens de rotation une pluralité de positions d'encliquetage (A, B, C, D, E, F), dans lequel :
- le dispositif d'acquisition (20) est conçu de manière à saisir sur la base du codage du au moins un élément de codage (16, 18) la position d'encliquetage respective (A, B, C, D, E, F) et l'angle de rotation absolu entre au moins deux des positions d'encliquetage (A, B, C, D, E, F)
**caractérisé en ce que** :
- l'actionneur rotatif (12) présente trois éléments de codage (16, 18) et le dispositif d'acquisition (20) délivre sur la base du codage respectif des éléments de codage (16, 18) pour deux des trois éléments de codage (16, 18) respectivement un signal de sortie numérique (40, 42) et pour le troisième des trois éléments de codage (16, 18) un signal de sortie analogique (44).

2. Dispositif de commande (10) selon la revendication 1,
**caractérisé en ce que** :
le dispositif de commande (10) comprend un dispositif de commande qui délivre un signal de commande pour commander le dispositif fonctionnel en fonction de la position d'encliquetage acquise (A, B, C, D, E, F) et/ou de l'angle de rotation absolu acquis entre les aux moins deux positions d'encliquetage (A, B, C, D, E, F).

3. Dispositif de commande (10) selon la revendication 1 ou la revendication 2,
**caractérisé en ce que** :
le dispositif d'acquisition (20) est conçu pour saisir, sur la base du codage du au moins un élément de codage (16, 18), une vitesse de rotation et/ou une modification de la vitesse de rotation de l'actionneur rotatif (12).

4. Dispositif de commande (10) selon la revendication 1,
**caractérisé en ce que** :
le dispositif d'acquisition (20) détermine sur la base des deux signaux de sortie numériques (40, 42) le sens de rotation et la position d'encliquetage respective (A, B, C, D, E, F) de l'actionneur rotatif (12).

5. Dispositif de commande (10) selon la revendication 1 ou la revendication 2,
**caractérisé en ce que** :
le dispositif d'acquisition (20) détermine sur la base du signal de sortie analogique (44) l'angle de rotation absolu entre les au moins deux positions d'encliquetage (A, B, C, D, E, F).

6. Véhicule automobile comprenant au moins un dispositif fonctionnel et un appareil de commande (10) selon l'une quelconque des revendications précédentes pour commander le au moins un dispositif fonctionnel.
